# EUROPEAN PATENT APPLICATION

(11) **EP 2 530 632 A1**
(43) Date of publication of application: **05.12.2012**
(21) Application number: 11305673.3
(22) Date of filing: 01.06.2011
(51) Int. Cl.: G06Q 10/00

(54) **Method and system for dynamic profile structure handling and management**

(71) Applicant: Amadeus S.A.S., 06410 Biot (FR)
(72) Inventor: Martig, Lionel, 06410 Biot (FR); Deram - Cleac'h, Pauline, 06560 Valbonne (FR); Ehrmann, Olivia, 06000 Nice (FR); Rech, Pascale, 06650 Le Rouret (FR); Vieillard-Baron, Bruno, 06410 Biot (FR)
(74) Representative: Anderson, Angela Mary

(57) **Abstract**

A method and system for creating a dynamic profile structure for managing and handling transactions between a Travel Agent and a customer, wherein the transactions require a plurality of predefined fields to be entered by a user to instigate a transaction; the method comprising: developing via a computer a model of a geographical structure for use with any user, which geographical structure includes a number of levels and nodes; defining via a computer a first profile structure for each node which includes a plurality of predetermined geographical fields specific to each level or node; developing via a computer a model of a second structure associated with the customer requirements, which second structure includes a number of nodes, such as countries; defining via a computer a second profile structure for each node which includes a plurality of predetermined second fields specific to each node; and forming via a computer a combined profile structure for a first use case from the plurality of geographical fields and the plurality of second fields based on a customer defined requirement.

## Description

### Field of the invention

The present invention relates to a method and system for dynamic profile structure handling and management, particularly in respect to the travel industry.

### Background of the invention

In the travel industry there are a number of Travel Agents or other Travel providers (hereinafter referred to as Travel Agents or TAs) which provide bespoke travel solutions for corporations and companies.

In these types of situations the TA can manage all the travel for the employees of a particular corporation. This means that the corporation can mandate rules and regulations for all travel purchased for business purposes by the employees of the corporation. In addition to the corporation rules, the TA may also need to manage other business rules, for example based on country, region, etc. The combinations of rules under which the TA must operate are vast and complex.

One way in which the travel industry has started to address the vast, complex management issues of providing travel solutions for corporations is to make use of profiles for users.

The Travel industry has initially focused on the delivery of very specialized travel reservation services for offline and online channels. These include traditional point-of-sales applications, mid-and-back office applications, self-booking tools, etc. Some peripheral services, such as profile management, have also been developed but are designed to support just the very specialized reservation services.

As a result, most of the profile management has become as specialized as the travel reservation services they are used within. All include specific databases, data structures and data flows for each channel, customer or corporation. The technology infrastructure, which has supported these profile services, is based on multiple proprietary segmented solutions, which makes it difficult to share profile data across different systems.

Travelers have also started to seek a global travel shopping approach across multiple channels. These new approaches and other economic and competitive factors have strengthened the need for TAs to deliver consistent global services across all channels. An effect of this has driven the need for a dedicated repository of profile data offering a central storage and the distribution of this profile data towards all necessary downstream systems, including but not limited to Global Distribution Systems (GDS) and Self Booking Tools (SBT).

An important metric to measure the success of a TA is the volume of bookings. The quality of the customer profile data is a metric, which although not often used and difficult to compute would be a useful tool, despite the fact that at present, a significant part of the bookings are processed in a profile-less mode.

Business practices are changing and profile has become an important element for competitive business differentiation. In particular, accurate profile data does not only allow a TA to provide travelers with personalized offers, but also allows optimization of the front-to-back integration processes (i.e. from point-of-sales to mid-and-back office, etc.), and the customer-care related processes (i.e. data-mining, Customer Relationship Management (CRM), analytics, etc.).

To ensure the quality of profile data, a profile structure has to be defined. The profile structure precisely describes the constraints applicable to a profile: which fields can be used (e.g. name, address, passport, etc.); what are the constraints of each field (e.g. length, characters, regular expression, etc.); and what are the attributes of each field (e.g. mandatory, optional, default values, editable only by travel agents, etc.).

The profile structure provides substantial flexibility which is needed to ensure the quality of the data. A drawback of setting up profiles for a new corporation with a TA is that the process is lengthy and resource consuming. This is due in part, to the fact that the corporation has many attributes and constraints which must all be taken into consideration. In addition, maintaining the profile structure is also lengthy and resource consuming. A change in a field which is global or specific to a market may require an update to the profile structures of many customers.

The uptake of the use of profiles has been growing in the travel industry. Profiles are currently handled directly inside booking tools such as GDS; and/or an SBT. Some systems, such as a GDS, offer little customization of the profile structure. Other systems, such as an SBT, offer customization of the profile structure via a hierarchical model. A node in the hierarchical model or tree is called a site or a community. There is a concept of inheritance in that fields are defined at a given level and their attributes can be modified below that level if required.

A major problem with this hierarchical model is that there is only one dimension. As a result, it is possible to independently handle features specific to a country, a geographical area or a company but not all together. There are no instances of multiple inheritance.

The present known systems which include the concept of inheritance and community require intensive and extensive deployment efforts. Due to the large number of constraints, many iterations and examples are used to identify the best hierarchy model for a given corporation. In addition, a significant number of nodes have to be created.

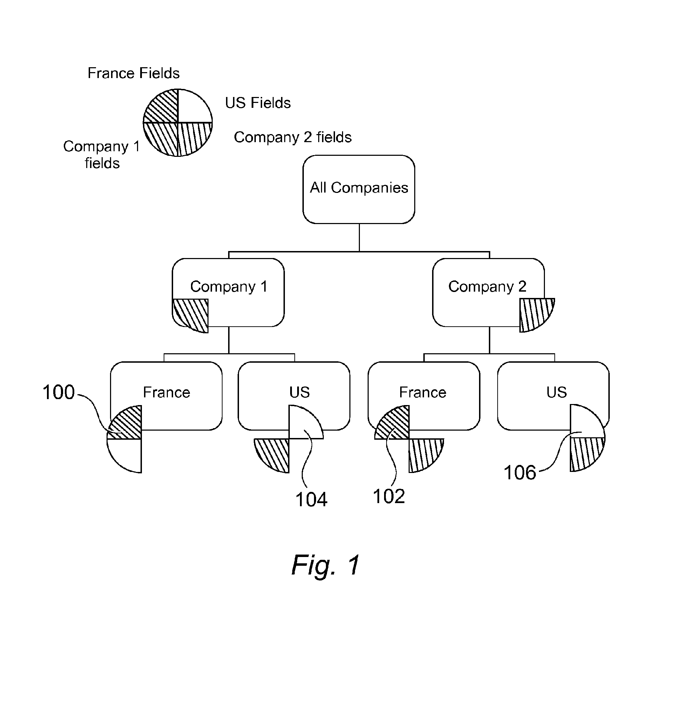

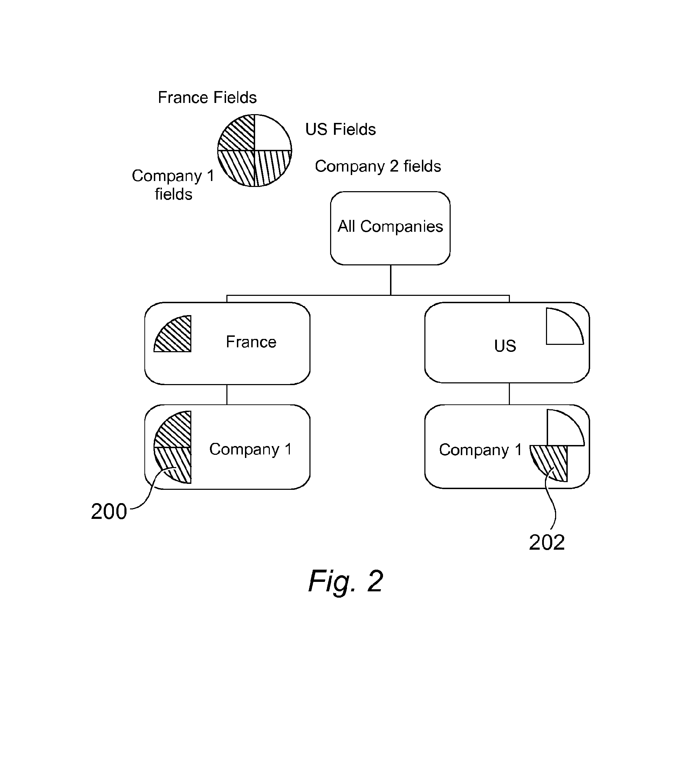

In addition to the "one dimensional" limitation, there may be instances where duplication will occur. In Figure 1 and Figure 2, certain fields can be seen to be duplicated. Figures 1 and 2 show hierarchical models for country specific information and corporation specific information respectively. In Figure 1, the country specific setup is duplicated at nodes 100 and 102 and 104 and 106 for France and US fields respectively. In Figure 2, the corporation specific setup is duplicated at nodes 200 and 202. As a result, if a field is changed which has duplicates, it is necessary to change all the branches where the information is duplicated. If, for example, a feature is changed in Field France in Figure 1, updates are required at nodes 100 and 102.

In a more complex hierarchical model, the duplication may be many fold which can result in a still higher processing load. Another problem which can exist is the need to change the profile structure of a user. If this entails a change in community, such as an employee relocating from France to USA the profile change can be complex. Sometimes this operation is just not possible and when it is possible, the change has to be done by means of a specific process by the system or the user. This makes the change process unclear since profile data already contains the country information and the systems do not lend themselves to accept changes in certain fields without a specific level of authority.

US 2004/0044664 (Sabre Inc.) discloses a method and system for improving the sharing and the consolidation of data between different databases. The method provides an improved architecture and specific rules for organizing data to be stored in a traveler data profile. A specific identifier is associated to a specific traveler data profile. The identifier is stored in a master database. The identifier is used to access the associated traveler data profile before processing any update of the traveler data profile.

The prior art does not address the problems of replication and hierarchical models and thus fails to solve many of the existing problems.

### Objects of the invention

It is an object of the present invention to overcome at least some of the problems associated with the prior art.

It is a further object of the present invention to provide a method and system for dynamic profile structure handling and management.

### Summary of the invention

The present invention provides a method and system as set out in the accompanying claims.

According to one aspect of the present invention there is provided a method of creating a dynamic profile structure for managing and handling transactions between a Travel Agent and a customer, wherein the transactions require a plurality of predefined fields to be entered by a user to instigate a transaction; the method comprising:
- developing via a computer a model of a geographical structure for use with any user, which geographical structure includes a number of levels and nodes;
- defining via a computer a first profile structure for each node which includes a plurality of predetermined geographical fields specific to each level or node;
- developing via a computer a model of a second structure associated with the customer requirements, which second structure includes a number of nodes, such as countries;
- defining via a computer a second profile structure for each customer which includes a plurality of predetermined second fields specific to each customer;
- forming via a computer a combined profile structure for a first use case from the plurality of geographical fields and the plurality of second fields based on a customer defined requirement.

Optionally, using the combined profile structure to retrieve data from a user to carry out a transaction.

Optionally, the step of defining the plurality of geographical fields comprises defining fields at a global level, at a regional level and a country level.

Optionally, forming the regional level of a plurality of nodes.

Optionally, forming the country level of a plurality of nodes each relating to a country.

Optionally, the step of defining the plurality of second fields comprises defining fields for each customer and applying the fields at the country nodes.

Optionally, forming the country level of a plurality of nodes each relating to a country in which the customer carries out business.

Optionally, forming the combined profile for a user by combining the geographic profile structure and the second profile structure on a country by country basis at the country node.

Optionally, carrying out a validity and/or consistency check on the profile structure based on Travel Agent and customer data.

According to a second aspect of the invention, there is provided a system for creating a dynamic profile structure for managing and handling transactions between a Travel Agent and a customer, wherein the transactions require a plurality of predefined fields to be entered by a user to instigate the transaction; the system comprising:
- a model of a geographical structure for use with any user, which geographical structure includes a number of levels and nodes;
- a module for defining via a computer a first profile structure for each node which includes a plurality of predetermined geographical fields specific to each level or node;
- a model of a second structure associated with the customer requirements, which second structure includes a number of nodes, such as countries;
- a module for defining via a computer a second profile structure for each node which includes a plurality of predetermined second fields specific to each node;
- a module for forming via a computer a combined profile structure for a first use case from the plurality of geographical fields and the plurality of second fields based on a customer defined requirement.

Optionally, the combined profile structure is used to retrieve data from a user to carry out a transaction.

Optionally, the fields are at a global level, at a regional level and a country level.

Optionally, the regional level includes a plurality of nodes.

Optionally, the country level includes a plurality of nodes each relating to a country.

Optionally, the plurality of second fields comprises fields for each customer level which are applied at a country node.

Optionally, the country level includes a plurality of nodes each relating to a country in which the customer carries out business.

Optionally, the combined profile is formed by combining the geographic profile structure and the second profile structure on a country by country basis at the country level.

Optionally, a validity and/or consistency check is carried out on the profile structure based on Travel Agent and customer data.

### Brief description of the drawings

Reference will now be made, by way of example, to the accompanying drawings, in which:
Figures 1 and 2 are block diagrams of a prior art hierarchical models to demonstrate problems,
Figure 3 is a block diagram showing examples of field groupings and standards for a geographical area, in accordance with an embodiment of the invention,
Figure 4 is a block diagram of the geographical tree of figure 3 showing additional information, in accordance with an embodiment of the invention,
Figure 5 is a block diagram of a corporation tree, in accordance with an embodiment of the invention,
Figure 6 is a flow diagram of a profile structure use case, in accordance with an embodiment of the invention,
Figure 7 is a block diagram showing a profile structure memory pool architecture, in accordance with an embodiment of the invention,
Figure 8 is a block diagram showing a profile structure use case, in accordance with an embodiment of the invention.

### Detailed description of the preferred embodiments

The present invention enables enforcement of standards in profile data for improved management and handling thereof. In addition, the invention seeks to dramatically reduce the time spent in setting up a profile structure, particularly in the deployment of a new corporation. The maintenance of the standard profile data is hidden at the corporation level. The handling and management of any transaction between a user and TA is thus well regulated and hidden. The transactions may include purchase of travel and/or services; management of profiles; and any other appropriate action.

For most TAs a traveler profile will have a similar structure. In particular, the profiles will generally include some fields which the TA always wants to capture; some fields which the TA wants to capture when users are located in specific geographic areas; and some fields which the employer of the user the corporations wants to capture in order to comply with their internal policies (e.g. human resources, cost saving, procurement, etc.).

The invention gives the TA the ability to categorize fields, based on the context in which they apply such as always, based on geographic area, based on corporation, etc. In addition, the invention allows the TA to automatically generate the right profile record mask based on the context applicable for each user.

A geographical factor is one of the key factors for standard profile fields. Geographic considerations have major consequences to many situations in the purchase and management of profile data for the travel industry. Profile fields, which need to be captured for the one country, will generally be different from the profile fields required for other countries.

In addition, the geographic factors are also a key influence for the organization of TAs, which have local representatives operating in most regions and countries. As a result, capturing geographical specificities for profile fields is important for TAs as well. Typically, the local representatives of a TA in a specific country would be best placed to define the fields required in that country.

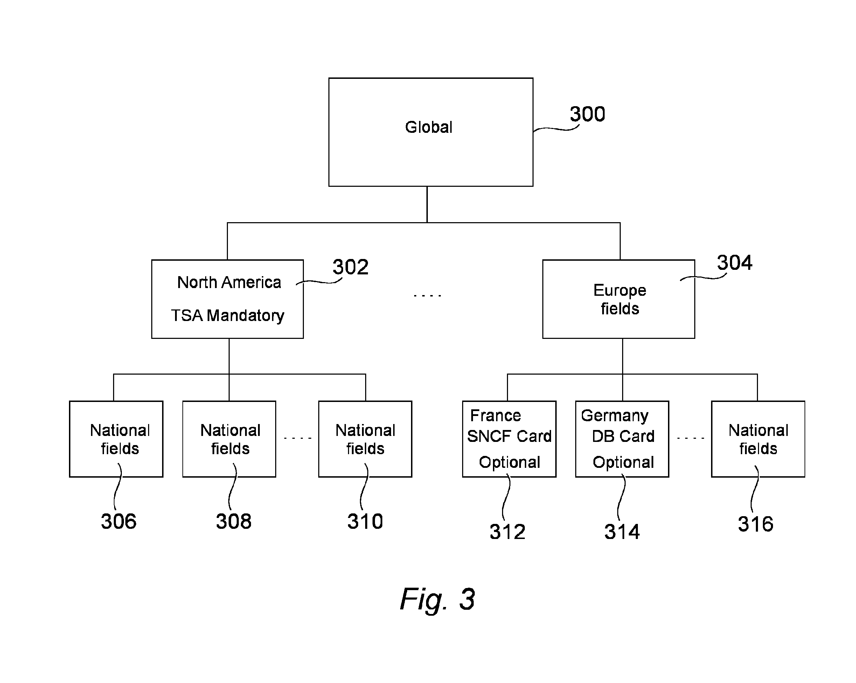

Referring to figure 3, a typical grouping of fields is shown. A global node 300 has two regional nodes, North America 302 and Europe 304. Each regional node includes a number of countries 306, 308, 310, 312, 314 and 316.

This model of geographic organization allows TAs to model their worldwide business operations based on these three levels: a global worldwide level (group of all regions); a regional level (group of countries); and a country level.

The model requires certain constraints to ensure there are no problems in operating the profile structures. The constraints include the following: each region should include a minimum of one country; one country can only be part of one region.

Other model structures and constraints may apply in different circumstances.

For each level (e.g. global, regional, country), the TA can define the standard fields required for each geographical group. For example, it can say that for the global group, name and surname as mandatory data, as this profile data is always required, regardless of the region or country of the traveler. In addition, the North America region can include the region specific TSA number as mandatory data. Similarly, the France group can include the France-specific an "SNCF Card" as optional data and the Germany group can include the Germany-specific "Deutsch Bahn Card" as optional data.

It should be noted that certain constraints may also apply to the fields. These can include: a field can only be part of one level; a field defined as a national field can not also be defined as a global or a regional field, and vice versa; and a single field can be defined as a national field for multiple countries.

Having established the model, this can be used to define the standard fields required for each country. For each node or level a profile structure (PS) can be defined. This includes the fields, constraints and attributes for each profile structure and acts as a standard for each country for deployment in various corporations as required. The deployment will be described in greater detail below. A benefit of having standard country fields and profiles means that any updates to a specific country can be applied to the standard rather than every relevant node in the prior art systems. Again, this will be described in greater detail below. Being able to use the standard field means that deployment of a TA should be less complex and reduce the workload that would otherwise have been needed.

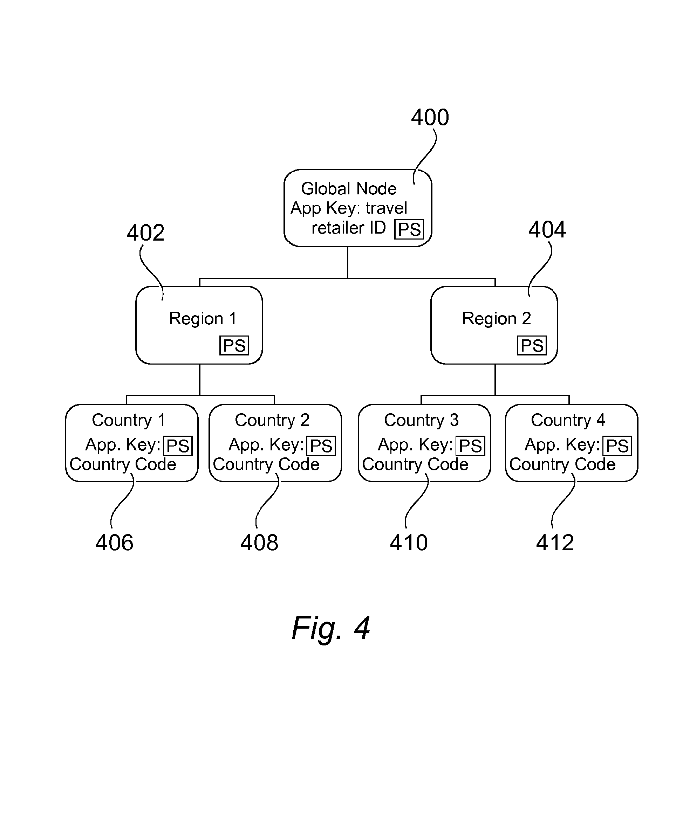

Referring now to figure 4, the geographic standard tree is shown for a TA. The geographic tree is formed with a global node and level 400 and a number of regional nodes 402 and 404. The global node includes a TA ID field and a profile structure. The regional nodes each include profile structures. The regional level can have more regions depending on the regions in which the Travel Agent runs operations for the corporation.

Each region will include one or more countries also defined by the requirements of the Travel Agent. The country nodes 406, 408, 410 and 412 each include a profile structure for the standard country fields.

When a profile is created in the system, the final profile structure is computed based on the country of employment of a user. This field is then a mandatory field for all profiles of the system. The final profile structure in the country node will be the result of the addition of the following fields: fields from the global group; fields from the appropriate regional group; fields from the national group of the country of employment of the user; and custom fields specific to the corporation.

This addition is technically possible without a merge conflict existing as the following constraints are put in place: a field can only be part of one level; a field defined as national can not be defined as global or regional, and vice versa. Fields specific to a corporation cannot be part of a geographical group.

The use of this type of functionality for a corporation reduces the deployment and maintenance effort. In addition, this type of setup hides the existence of several profile structures within a same corporation from the users and processes. As a result, if a user needs to change a country, it may be necessary to change community. This is a specific action which is not naturally supported by the prior art models.

However, with the present invention, this is hidden and the profile structure is changed when the country field of the profile is updated automatically.

As previously indicated, all the geographical field groups are stored independently for any deployed corporation. The profile structure is computed in real time each time the user accesses a profile in the system.

The use of standard storage templates for geographical areas means the country templates are kept separately from the corporation specific one. All the possible combinations for a given TA, country and/or corporation are not required as is the case for present day online booking tools.

In order to fully deploy a corporation in a TA system the present invention implements a two tree system. The first is the geographical tree as described above. One tree and/or branch is required for each TA but the tree and/or branch may be shared for more than one corporate customer from this Travel Agent. The nodes of the tree are a global root node for a given TA, and further include one node for a region and one for a country. This means the "depth" of the TA retailer specific branch is three. Each node has a reference to one profile structure that will contain the elements and/or fields defined at each level in the form of a list.

The second tree is a corporation tree and has a depth of two with a corporation node and a node for each country in which the corporation operates. This tree is used to identify in which countries the corporation operates and should be deployed. Each node includes a profile structure for the corporation specific custom fields. It should be noted that the country nodes in the second tree are used as a reference link to the geographic tree. These corporation specific custom fields may include rules that are specific to the country concerned.

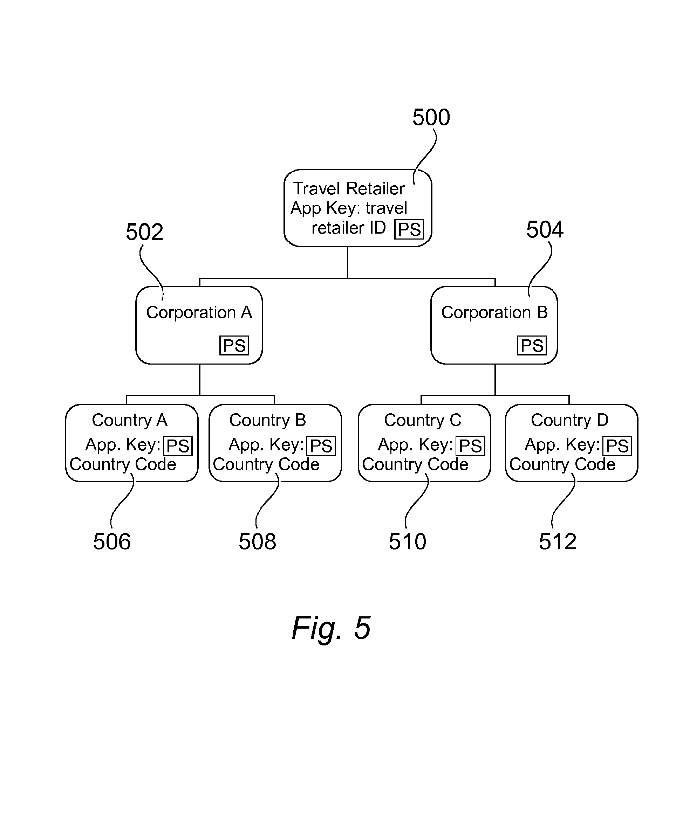

The corporate tree is shown in figure 5 and shows the global node 500; nodes for two corporations 502 and 504; and nodes for countries for each corporation 506, 508, 510, and 512. The number of countries for each corporation will include all countries in which the corporation has staff or contractors who may need to purchase business travel from the TA.

To match the two separate trees, some "applicative keys" are associated to each node. These will contain a value which uniquely identifies a country or TA for any application.

Different business models and structures may require trees of more or less depth than is shown. Similarly, the trees may include more or less nodes. Also, an implementation may include two trees or more.

The two trees are then combined together in order to merge the geographical profile structure and the corporate profile structure for a given context. The context is defined by the country, the corporation and the TA. The combined profile structure includes all required fields both from a country and corporation basis for a specific use case. As the country nodes from the corporation tree do not contain any fields per se. the fields for a country are taken from the geographic tree. The dynamic profile structure is built based on the corporate specific custom field and the standard country fields from the geographic tree. By storing the geographical and corporate profile structures separately for a specific use case it is necessary to find the TA and/or country and/or corporation combination which is applicable and then to compute the profile structure for the use case. Different use cases will give rise to different combined profile structures.

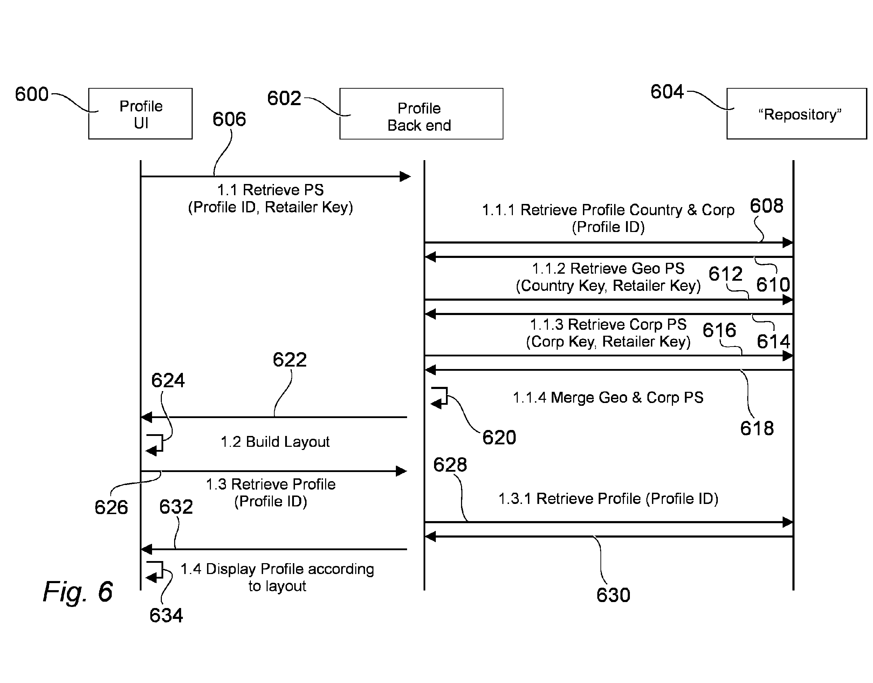

Figure 6 describes the process steps carried out between the user interface 600; the profile back end 602 and a repository 604. In this case, the corporation and the country will be retrieved from the profile data and the TA will be given by the user interface (UI) 600. One user interface is deployed for each TA.

In a first step 600, a user requests retrieval of a profile structure, which includes a user ID (profile ID) and a TA identification code (retail key). The profile back end requests, at step 608, and retrieves, at step 610, the country and corporate profile for the user from the repository. The profile back end then requests, at step 612, and retrieves at step 614, a geographic profile structure based on the country key and the TA identification code. The profile back end requests, at step 616, and retrieves, at step 618, the corporate profile structure based on the corporate key and the TA identification code. At step 620 the geographic and corporate profile structures are merged to form a combined profile structure. The combined profile is then passed to the profile user interface at step 622. The profile layout is built at step 624 and the user ID request for profile data is made to the profile back end at step 626. The profile back end requests, at step 628 and retrieves, at step 630, the user ID profile data which is then passed to the profile user interface at step 632. The profile data is then displayed according to the layout.

Figure 6 relates to one use case but other use cases are also possible. For example, a use case to create a profile may be carried out. In this case, the TA will be known whilst the country and corporation will be the first information requested from the user. Other information may also be included in the profile depending on what is needed.

A further use case is to update the profile. In this case, the UI is aware that if the user has changed country, the profile structure will have to be computed again according to the new context of the user.

The present invention also addresses the issues of computing profile structure and ensuring the consistency of data across the whole system. The profile application needs to compute the profile structure for many different use cases. In addition, consistency is critical due to the need for taking into account changes in the profile structure in near-real time. The consistency need may be satisfied by storing the profile structure trees in a database and accessing them each time a profile structure is needed in order to compute it. However, this may give rise to performance issues.

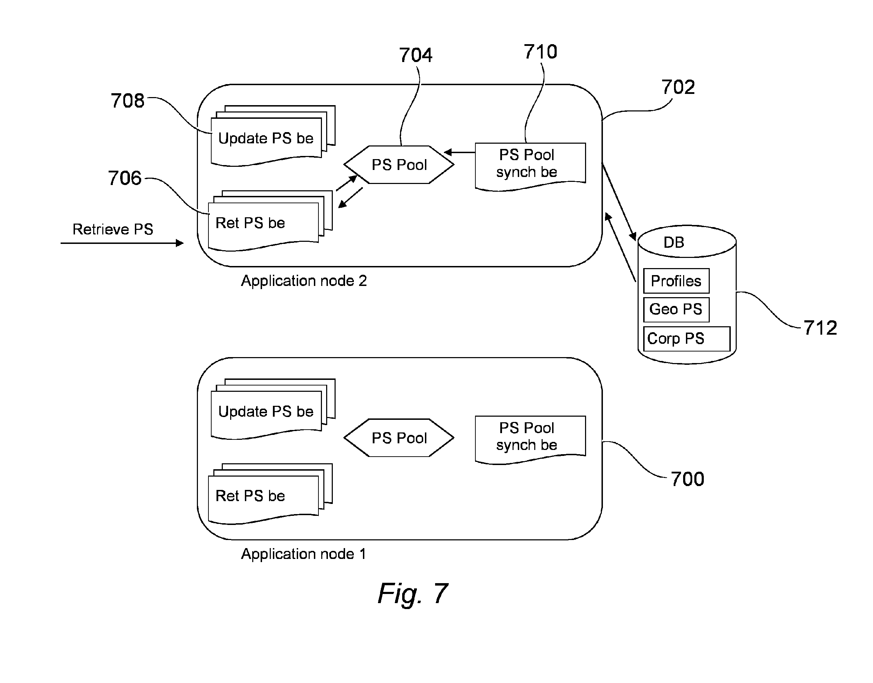

In order to overcome any possible performance issues the implementation is based on the principle of using a profile structure memory pool for each machine. The architecture for this is shown in figure 7.

Figure 7 shows two application nodes 700 and 702. Each node includes a profile structure memory pool 704; an update profile structure module 706; a retriever profile structure module 708, and a profile structure pool synchronization module 710. In addition, a database 712 can be accessed to obtain profiles, geographic profile structure and corporate profile structures. These include the trees and profile structures for one or more deployed corporations.

These trees and profile structure are also replicated in shared memory for each application node used to process transactions. The memory pool is accessed by all back-end machines which need to obtain a profile structure. In addition, the memory will contain the result of any computed profile structures that are carried out or have occurred on the appropriate machine.

Population of the memory in this manner makes sense in this context as it is likely that several transactions on one given profile may be required in a similar timeframe, especially when the end user is a traveler. Similarly, when the end user is a process such as an HR Feed, transactions for one given context may also be required.

The memory pool is populated at the start-up time of the machine or before traffic commences and is also updated each time there is an update done on the geographical or corporate profile structures. This is carried out by the profile structure synchronization module 710 which obtains the relevant data from the database 712 and loads the data into the profile structure memory pool 704.

When a request to retrieve a profile structure 714 is received, the profile structure memory pool will retrieve the profile structure if it exists. If not, the profile structure is computed and the result enters the memory pool. The profile structure is then returned to the retrieve profile structure module to be used as required.

This architecture ensures good performance as there are not multiple exchanges between the application node and the database. This also offers scalability by reducing the number of transactions which occur on the central database. If necessary, synchronization of the memory pool and the database can occur in a regular time based manner.

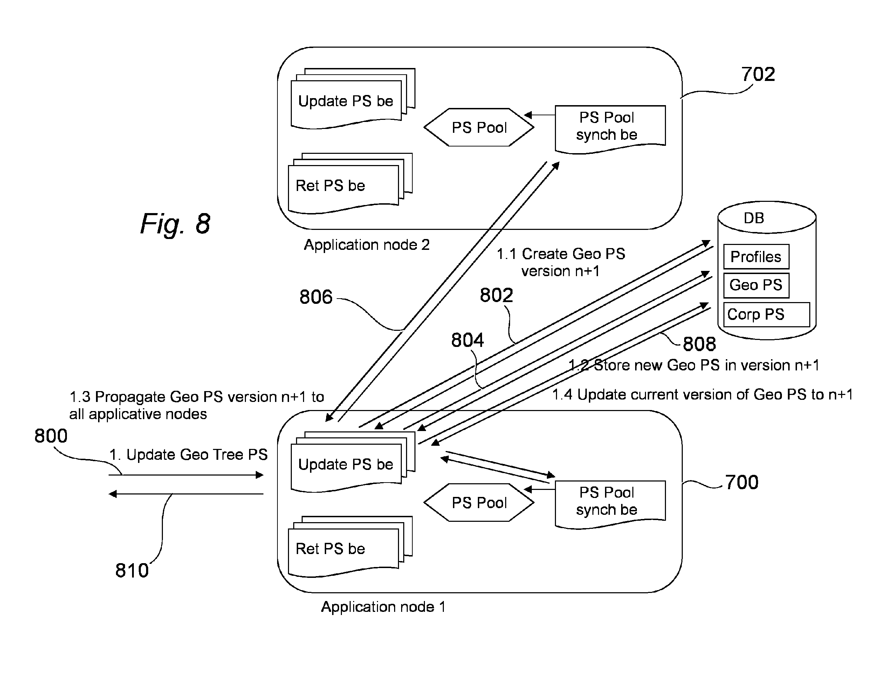

Referring to figure 8, the consistency and update processes will now be described. The architecture is the same as in figure 7, in which the same references refer to the same elements. In this use case, an update is requested 800 for a geographic tree profile structure. The request is received at the update profile structure module. In step 802, the update profile structure module requests creation of an n + 1 version of the geographic profile structure in question. The return arrow in each step indicates an acknowledgment. In step 804, the new profile structure for version n + 1 is stored. In step 806, the change to the profile structure is automatically detected by to all application nodes. The appropriate memory pool will then be updated. This makes use of a feature provided by an appropriate service integrator and open transaction framework. The service integrator also provides functioning required to add and/or remove machines.

Once all the application nodes have received the n + 1 version, they will then have an n and an n + 1 version. The central database is then updated at step 808 to indicate the current version is the n + 1 version which should now be used by all memory pools. Each time a tree or a profile structure computed from this tree is retrieved there will be a check to determine if the pool contains a newer version. If yes: then a call to the database will be made to determine if the new version has to be used or not.

Completion of a change request or update is communicated to the user who requested the change at step 810.

With this mechanism the "update profile structure" transaction is slightly longer but this is generally acceptable because updates of templates are relatively scarce and a medium response time is reasonable.

At any time the profile structure can be validated or checked for consistency. Typically these checks are carried out when the profile structure is formed, changed, updated or otherwise accessed. The validity and consistency can be checked by any appropriate mechanism, such as sum of checks or any other validation or consistency methodology.

A person skilled in the art will understand that some or all of the functional entities as well as the processes themselves may be embodied in software, or one or more software-enabled modules and/or devices or in any combination thereof. The software may operate on any appropriate computer or other machine. The operation of the invention provides a number of transformations such as changes to profile, replication, update, etc.

This invention has been described with reference to the purchase of tickets in the travel environment. However, it will be appreciated that the invention may apply to other environments. It will be appreciated that this invention may be varied in many different ways and still remain within the intended scope of the invention.

## Claims

1. A method of creating a dynamic profile structure for managing and handling transactions between a Travel Agent and a customer, wherein the transactions require a plurality of predefined fields to be entered by a user to instigate a transaction; the method comprising:
- developing via a computer a model of a geographical structure for use with any user, which geographical structure includes a number of levels and nodes;
- defining via a computer a first profile structure for each node which includes a plurality of predetermined geographical fields specific to each level or node;
- developing via a computer a model of a second structure associated with the customer requirements, which second structure includes a number of nodes, such as countries;
- defining via a computer a second profile structure for each node which includes a plurality of predetermined second fields specific to each node;
- forming via a computer a combined profile structure for a first use case from the plurality of geographical fields and the plurality of second fields based on a customer defined requirement.

2. The method of claim 1, further comprising using the combined profile structure to retrieve data from a user to carry out a transaction.

3. The method of claim 1 or claim 2, wherein the step of defining the plurality of geographical fields comprises defining fields at a global level, at a regional level and a country level.

4. The method of claim 3, further comprising forming the regional level of a plurality of nodes.

5. The method of claim 3 or claim 4, further comprising forming the country level of a plurality of nodes each relating to a country.

6. The method of any preceding claim wherein the step of defining the plurality of second fields comprises defining fields for each customer and applying the fields at a country node.

7. The method of claim 6, further comprising forming the country level of a plurality of nodes each relating to a country in which the customer carries out business.

8. The method of claim 6 or claim 7, further comprising forming the combined profile for a user by combining the geographic profile structure and the second profile structure on a country by country basis at the country node.

9. The method of any preceding claim, further comprising carrying out a validity and/or consistency check on the profile structure based on Travel Agent and customer data.

10. A system for creating a dynamic profile structure for managing and handling transactions between a Travel Agent and a customer, wherein the transactions require a plurality of predefined fields to be entered by a user to instigate the transaction; the system comprising:
- a model of a geographical structure for use with any user, which geographical structure includes a number of levels and nodes;
- a module for defining via a computer a first profile structure for each node which includes a plurality of predetermined geographical fields specific to each level or node;
- a model of a second structure associated with the customer requirements, which second structure includes a number of nodes, such as countries;
- a module for defining via a computer a second profile structure for each node which includes a plurality of predetermined second fields specific to each node;
- a module for forming via a computer a combined profile structure for a first use case from the plurality of geographical fields and the plurality of second fields based on a customer defined requirement.

11. The system of claim 10, wherein the combined profile structure is used to retrieve data from a user to carry out a transaction.

12. The system of claim 10 or claim 11, wherein the fields are at a global level, at a regional level and a country level.

13. The system of claim 12, wherein the regional level includes a plurality of nodes.

14. The system of claim 12 or claim 13, wherein the country level includes a plurality of nodes each relating to a country.

15. The system of any of claims 10 to 14, wherein the plurality of second fields comprises fields for each customer which are applied at a country node.

16. The system of claim 15, wherein the country level includes a plurality of nodes each relating to a country in which the customer carries out business.

17. The system of claim 15 or claim 16, wherein the combined profile is formed by combining the geographic profile structure and the second profile structure on a country by country basis at the country level.

18. The system of any of claims 10 to 17, wherein a validity and/or consistency check is carried out on the profile structure based on Travel Agent and customer data.

19. A computer program comprising instructions for carrying out the steps of the method according to any one of claims 1 to 9, when said computer program is executed on a computer system.
